# EUROPEAN PATENT APPLICATION

(11) **EP 4 614 207 A1**
(43) Date of publication of application: **10.09.2025**
(21) Application number: 24161436.1
(22) Date of filing: 05.03.2024
(51) Int. Cl.: G02B 21/26, G02B 21/34

(54) **SAMPLE POSITIONING DEVICE AND LIGHT SHEET MICROSCOPE**

(71) Applicant: Leica Microsystems CMS GmbH, 35578 Wetzlar (DE)
(72) Inventor: Beljan, Mate, 35578 Wetzlar (DE)
(74) Representative: Schaumburg und Partner Patentanwälte mbB

(57) **Abstract**

A sample positioning device (100) for a light sheet microscope (200) comprises a stage insert (110) configured to be received by a stage (112) of the light sheet microscope (200). The stage insert (110) comprises a rotatable sample holder (102). The rotatable sample holder (102) comprises a sample position (106) configured to receive a sample carrier (104). The rotatable sample holder (102) is configured to be rotatable around an axis of rotation that is parallel to an optical axis (O2) of the light sheet microscope (200) thereby enabling a rotation of a sample (202) received by the sample carrier (104) in a field of view of the light sheet microscope (200) when the stage insert (110) is received by the stage (112) of the light sheet microscope (200).

## Description

### Technical fields

The invention relates to a sample positioning device for a light sheet microscope. The invention further relates to a light sheet microscope.

### Background

Light sheet microscopy is a fluorescence imaging technique. In light sheet microscopy, a sample is typically illuminated by a thin light sheet arranged perpendicular to the direction of observation. This configuration allows for optically sectioning a sample, enabling the selective illumination of specific planes within the sample. Multiple planes arranged next to each other in the sample can be sequentially illuminated and imaged, in order to image a volume of the sample. Thus, light sheet microscopy enables high-resolution, three-dimensional imaging with reduced phototoxicity and rapid data acquisition.

In order to acquire a volumetric image of the sample, the light sheet is moved through the sample along a scanning direction, for example using a galvo mirror. Typically, the acquired volumes are not cubic but stretched along the scanning direction of the light sheet. Depending on how the structure of interest is positioned in the sample, this internal orientation matches the scanning direction of the light sheet better or worse. Thus, in a typical light sheet microscope, the orientation of the imaged volumes is determined by the hardware. Consequently, to image a region of interest, it is often necessary to acquire and stitch together multiple volumes. Especially where speed is of the essence, for example with living samples, the time required to record multiple volumes offsets the time savings gained by using a light sheet illumination. With living samples in particular, there is also the problem that the sample can change between the images, so that artifacts can occur at the seams in a composite image.

### Summary

It is an object to provide a sample positioning device for a light sheet microscope and a light sheet microscope which overcome the aforementioned disadvantages of the state of the art.

The aforementioned object is achieved by the subject-matter of the independent claims. Advantageous embodiments are defined in the dependent claims and the following description.

The proposed sample positioning device for a light sheet microscope comprises a stage insert configured to be received by a stage of the light sheet microscope. The stage insert comprises a rotatable sample holder. The rotatable sample holder comprises a sample position configured to receive a sample carrier. The rotatable sample holder is configured to be rotatable around an axis of rotation that is parallel to an optical axis of the light sheet microscope thereby enabling a rotation of a sample received by the sample carrier in a field of view of the light sheet microscope when the stage insert is received by the stage of the light sheet microscope.

The rotatable sample holder enables the user to rotate the sample within the field of view of the light sheet microscope. This makes it possible to align the sample with the scanning direction of a light sheet generated by the light sheet microscope, and thus to align structures of interest in the sample with the volume imaged by the light sheet microscope. When the imaged volume is aligned with the structure of interest, the full recording speed can be utilized, so that there is only a minimal offset between the recorded planes in the imaged volume. At the same time the recording bandwidth is optimized, since the imaged volume contains everything relevant, but not much more than that. Another advantage is that fewer recorded volumes also mean significantly less exposure time and therefore less phototoxic stress on the sample. Thus, the proposed sample positioning device further improves on the two main advantages of light sheet microscopy, namely rapid three-dimensional imaging and reduced phototoxicity.

In an embodiment the stage insert is configured to be received in a recess of the stage, the recess being arranged along the optical axis of the light sheet microscope. The recess may be part of an opening of the stage which allows an observation of the sample from below and/or allows the sample to be illuminated from below. In particular, the recess may be formed by a ledge along the sides of such an opening. Such a ledge typically serves as a mounting point for accessories or additional equipment, such as slide holders or adaptors for non-standard sample containers. The recess provides support for the stage insert, and aids in its precise alignment and positioning.

Alternatively, the proposed sample positioning device for a light sheet microscope comprises a stage of the light sheet microscope. The stage comprises a rotatable sample holder and is configured to move the rotatable sample holder along at least one direction perpendicular to an optical axis of the light sheet microscope. The rotatable sample holder is arranged along the optical axis of the light sheet microscope, is configured to receive a sample carrier, and is configured to be rotatable around an axis of rotation that is parallel to an optical axis of the light sheet microscope to rotate a sample received by the sample carrier in a field of view of the light sheet microscope.

In this alternative embodiment, the rotatable sample holder is an integral part of the stage. Otherwise, the sample positioning device according to this alternative is identical to the sample positioning device comprising the stage insert described above. The sample positioning device comprising the stage has the same advantages as the sample positioning device comprising the stage insert. Both variants of the sample positioning device can be supplemented by the same features described in this document.

In another embodiment, the sample positioning device comprises a drive unit configured to rotate the rotatable sample holder, and a control unit configured to control the drive unit. The drive unit may in particular comprise one or more electric motors, such as stepper motors or linear motors, or magnetic drives. In this embodiment, the rotation of the rotatable sample holder is motorized by the drive unit. Thereby, the rotation of the rotatable sample holder can be fully automated. A number of automatic and/or manual control schemes that may be performed by the control unit and/or the user in order to control the rotation of the rotatable sample holder are described below with reference to further embodiments.

In another embodiment, the control unit is configured to receive a user input and to control the drive unit to rotate the rotatable sample holder according to the received user input. The user input may be received, for example, via a user input device such as a keyboard and/or mouse. By the user input, a user directly or indirectly controls the drive unit, and thus the rotation of the rotatable sample holder. A number of exemplary user inputs and how they are used to control the rotation of the rotatable sample holder are described in the following with reference to further embodiments.

In another embodiment, the user input corresponds to a rotation specified by a user. The control unit is configured to control the drive unit to rotate the rotatable sample holder according to the user-specified rotation. The user-specified rotation may for example comprise a direction of rotation and/or an amount of angular displacement. In this embodiment, the user directly controls the rotation of the rotatable sample holder. In this embodiment in particular, the sample positioning device may comprise a dedicated user input device which allows the user to input the user-specified rotation. Such a dedicated user input device may comprise one or more rotatable knobs allowing the user to specify the rotation by rotating the knob. Since the rotation of the rotatable sample holder is automated, the user has a much finer control over the orientation of the sample than would be possible if the user manually oriented the sample, allowing the user to make very precise adjustments of the orientation.

In another embodiment, the user input corresponds to a region of interest in the sample, the region of interest being specified by the user. The control unit is configured to determine a rotation of the rotatable sample holder based on the user-specified region of interest and to control the drive unit to rotate the rotatable sample holder according to the determined rotation. In this embodiment, the user inputs a region of interest, for example by selecting the region of interest in an overview image of the sample displayed to the user. The region of interest may for example comprise a specific structure of the sample, such as an organ, or a single specimen in a collection of specimens. The control unit then determines the rotation of the rotatable sample holder, for example, such that the user-specified region of interest can be imaged with the minimum number of recordings, thereby reducing phototoxic stress on the sample, and maximizing recording bandwidth. Ideally, the control unit determines the rotation of the rotatable sample holder such that the user-specified region of interest aligns with the volume imaged by the light sheet microscope in a single recording. However, larger regions of interest may require imaging the region of interest in multiple recordings.

In another embodiment, the sample positioning device comprises an image processing unit configured to receive image data from the light sheet microscope and to determine a region of interest in the sample based on image data corresponding to an image of said sample captured by the light sheet microscope. In this embodiment, the image processing unit is configured to automatically determine the region of interest based in the image data. For example, the image processing unit may automatically detect structures in the sample and determine the region of interest based on the detected structures. In another example, the user provides as the user input which structures should be determined as the region of interest, and the image processing unit automatically detects the user-specified structure in the sample and determines the region of interest accordingly. The user may in particular select the structure from a list of exemplary features displayed to the user, for example in the form of a drop-down menu. Orienting the sample such that the region of interest is aligned with the imaged volume has the above-mentioned advantages. In this embodiment, the determination of the region of interest is also automated, further speeding up image acquisition.

In another embodiment, the control unit is configured to control the drive unit to rotate the rotatable sample holder such that a scanning direction along which the light sheet generated by the light sheet microscope is scanned through the sample is aligned with the direction along which the region of interest has the largest extension. Typically, the distance over which the light sheet is moved along the scanning direction is larger than the extent of the focused area of the light sheet, i.e. the area of the light sheet which illuminates a single plane in the sample. Thus, by orienting the sample such that the direction along which the region of interest has the largest extension is aligned with the scanning direction, the number of recordings needed can be minimized. Minimizing the number of recordings has the above-mentioned advantages, in particular maximizing recording bandwidth by imaging as much of the region of interest as possible in a single recording.

In another embodiment, the sample positioning device comprises an image processing unit configured to receive image data from the light sheet microscope, to determine a rotation of the rotatable sample holder based on image data corresponding to an image of said sample captured by the light sheet microscope and to control the drive unit to rotate the rotatable sample holder according to the determined rotation. In this embodiment, the rotation is not necessarily determined based on a user-specified or automatically determined region of interest. Instead, the rotation may be determined based on other criteria, for example a geometric shape of structures in the sample which has been determined from the image data. Aligning the sample in that way has the above-mentioned advantages, in particular reducing phototoxic stress from multiple exposures.

In another embodiment, the control unit is configured to cause a translation of the stage in x- and/or y-direction. The control unit is in particular configured to cause the translation of the stage such that the field of view before a rotation of the rotatable sample holder has an overlap with the field of view after the rotation. For example, the translation of the stage and the rotation of the rotatable sample holder are combined such that the rotatable sample holder is rotated around the optical axis. In another example, the control unit may cause the translation of the stage such that the region of interest is moved into the field of view after a rotation of the rotatable sample holder. In both examples, it is ensured that an area of the sample that was observed before the rotation can still be seen in the field of view of the light sheet microscope after the rotation. This means that the user does not have to manually readjust the stage after a rotation in order to find the region of interest again.

In another embodiment, the sample positioning device comprises a control element configured to enable a user to manually rotate the rotatable sample holder. The control element may comprise knobs and screws, in particular a micrometer screw for fine adjustments. The control element may further comprise a handle-like element, similar to the handle of a crank, which allows the user to manually rotate the rotatable sample holder. Using the control element, the user can manually adjust the orientation of the rotatable sample holder, for example in order to align the sample with the scanning direction of the light sheet. Manual adjustment can be particularly faster when making changes over a large angular range, because the drive unit may operate with a very small step size.

The invention further relates to a light sheet microscope, comprising a sample positioning device as described above. The light sheet microscope has the same advantages as the sample positioning device described above. In particular, the light sheet microscope may be supplemented with the features of the dependent claims directed at the sample positioning device. Furthermore, the sample positioning device described above may be supplemented with the features described in this document in connection with the light sheet microscope.

In an embodiment the light sheet microscope comprises a single objective directed at the sample. In this embodiment, the light sheet microscope is configured as a single objective light sheet microscope, wherein the single objective is used for both illuminating the sample and receiving detection light from the sample, for example for the detection of a microscopic image of the sample. In such an arrangement, the light sheet is focused into the sample in such a way that it is oblique to the optical axis of the light sheet microscope. Because of this oblique position, such an optical arrangement is also called an oblique plane microscope. Since only a single objective is directed at the sample, the light sheet microscope can be designed to be particularly compact. It also allows imaging of samples that would be too large to be imaged with a typical light sheet microscopy setup involving two or more objectives directed at the sample.

### Short Description of the Figures

Hereinafter, specific embodiments are described referring to the drawings, wherein:
- Figure 1: is a schematic view of a sample positioning device for a light sheet microscope according to an embodiment;
- Figure 2: is a schematic view of an exemplary light sheet microscope comprising a sample positioning device according to an embodiment;
- Figure 3a: is a schematic overview image in which a sample has not been aligned with a scanning direction; and
- Figure 3b: is a schematic overview image in which individual regions in the sample have been align with the scanning direction;
- Figure 4: a is a schematic view of a sample carrier before rotation and translation; and
- Figure 4b: is a schematic view of the sample carrier after rotation and translation.

### Detailed Description

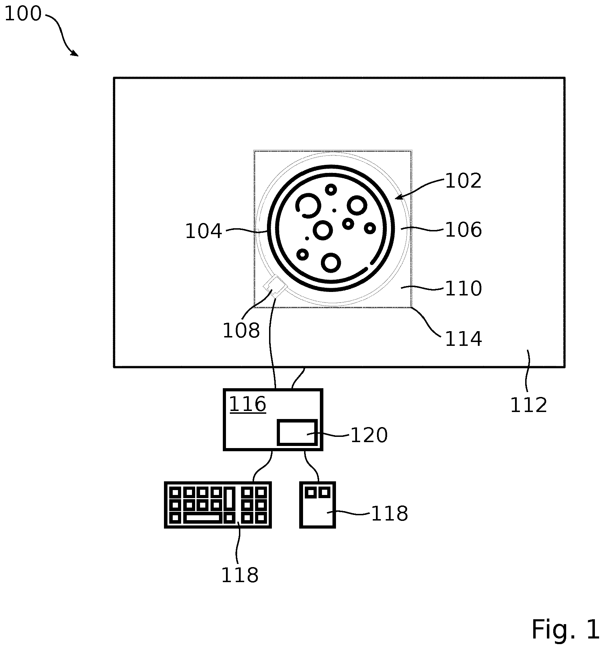

Figure 1 is a schematic view of a sample positioning device 100 for a light sheet microscope 200 according to an embodiment.

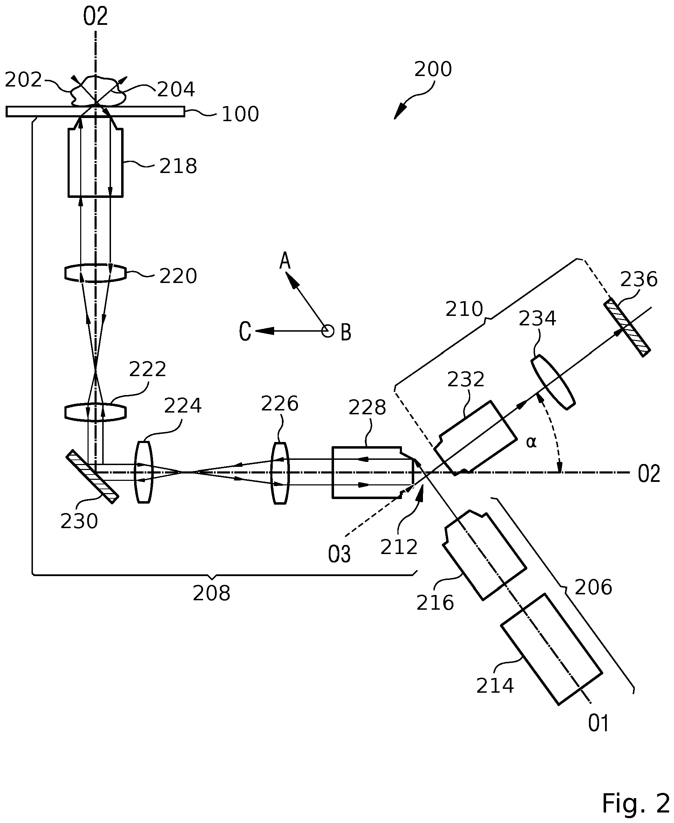

In order to generate volumetric images of a sample 202, i.e. three-dimensional images of a sample 202, a light sheet 204 generated by the light sheet microscope 200 is scanned through the sample 202 along a scanning direction C (c.f. Figure 2). Thereby, a number of parallel planes inside the sample 202 can be sequentially illuminated and imaged. In a typical light sheet microscope 200, the scanning direction C is fixed with respect to the hardware used for detection. The sample positioning device 100 allows a user to adjust the orientation of the sample 202, for example to better align the sample 202 with the scanning direction C.

The sample positioning device 100 comprises a rotatable sample holder 102 which is exemplary formed as a turntable. The rotatable sample holder 102 is configured to be rotatable around an axis of rotation that extends vertically from the image plane of Figure 1 and that is parallel to an optical axis O2 of the light sheet microscope 200. A sample carrier 106, exemplary shown as a Petri dish containing a number of biological specimens as the sample 202, can be received by a sample position 106 formed by a top surface of the rotatable sample holder 102. Thus, a rotation of the rotatable sample holder 102 adjusts the orientation of the sample 202 inside the field of view of the light sheet microscope 200. The rotation of the rotatable sample holder 102 is facilitated by a drive unit 108 of the sample positioning device 100. The drive unit 108 is exemplary formed by a stepper motor engaged with a rim of the rotatable sample holder 102.

In the embodiment shown in Figure 1, the rotatable sample holder 102 is part of a stage insert 110. The stage insert 110 is configured be arranged in an opening of a stage 112 of the light sheet microscope 200 which is covered from view by the stage insert 110 in Figure 1. The opening is arranged such that the optical axis O2 of the light sheet microscope 200 passes through the opening. In other words, the opening is arranged along the optical axis O2 of the light sheet microscope 200. The stage insert 110 exemplary fills the opening, and can be removed from the opening, for example to make room for other accessories, such as slide holders. A ledge 114 running around the inside of the opening mounts the stage insert 110 and prevents the stage insert 110 from falling through the opening. The ledge 114 is shown in Figure 1 by a dotted line since it is covered from view by the stage insert 110. In another embodiment, the rotatable sample holder 102 may be an integral part of the stage 112. In such an embodiment, the stage 112 is a part of the sample positioning device 100.

The stage 112 is configured to be moveable in two directions perpendicular to the optical axis O2 of the light sheet microscope 200 and the axis of rotation. In other words, the stage 112 is exemplary configured as an x-y-table. This allows the user to position the sample 202 within the field of view of the light sheet microscope 200, for example in order to bring a region of interest into view. In the embodiment shown in Figure 1, the stage 112 is motorized.

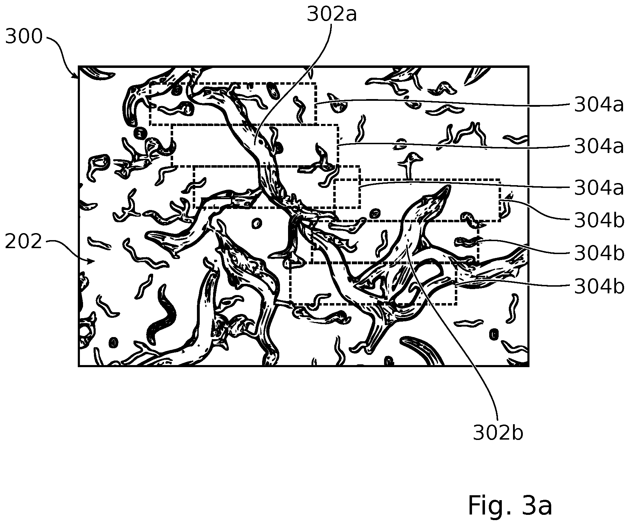

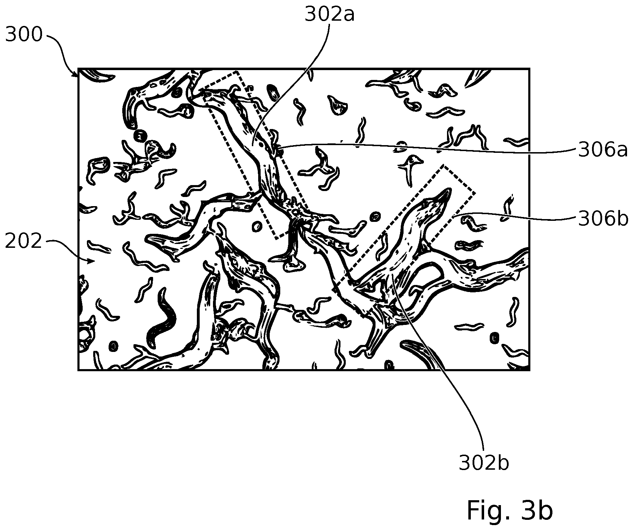

According to the embodiment shown in Figure 1, the sample positioning device 100 also comprises a control unit 116, exemplary formed by a desktop computer. The control unit 116 comprises input devices 118, exemplary formed as mouse and keyboard, and is configured to control the drive unit 108 and the stage 112, in particular based on a user input received via at least one of the input devices 118. This enables the user to control the position and orientation of the sample 202 using the sample positioning device 100 via a user input. In an example, the user specifies a rotation of the sample 202 by inputting an angle of rotation and a direction of rotation. The control unit 116 then controls the drive unit 108 to rotate the rotatable sample holder 102 by the user-specified amount in the user-specified direction. In another example, the user inputs a region of interest, for example by selecting the region of interest in an overview image of the sample 202 captured by the light sheet microscope 200. The control unit 116 then controls the drive unit 108 to rotate the rotatable sample holder 102 such that the user-selected region of interest is best aligned with the light sheet 204 generated by the light sheet microscope 200. This procedure is described in more detail below with reference to Figures 3a and 3b.

In this embodiment, the sample positioning device 100 further comprises an image processing unit 120 which is exemplary also formed as part of the control unit 116. The image processing unit 120 is configured to process image data provided by the light sheet microscope 200. In particular, the image processing unit 120 may be configured to determine a region of interest in an image captured by the light sheet microscope 200. For example, the user may select a structure such as a specific organ or organelle from a list presented to the user on a display of the desktop computer. The image processing unit 120 then determines one or more regions of interest corresponding to the user-selected structure. The control unit 116 then controls the drive unit 108 to rotate the rotatable sample holder 102 such that the automatically determined region of interest is best aligned with the light sheet 204. The image processing unit 120 may also directly determine the rotation of the rotatable sample holder 102 based on criteria other than a region of interest. In another example, the image processing unit 120 determines the rotation of the rotatable sample holder 102 such that a specimen is completely within the volume imaged by the light sheet microscope 200.

Figure 2 is a schematic view of an exemplary light sheet microscope 200 comprising a sample positioning device 100 according to an embodiment.

The light sheet microscope 200 further comprises an optical illumination system 206, an optical relay system 208, and an optical detection system 210. The optical axis O3 of the optical detection system 210 is tilted relative to the optical axis O2 of the optical relay system 208 by an angle α. The optical axis O1 of the optical illumination system 206 is perpendicular to the optical axis O3 of the optical detection system 210, so that the optical axis O1 of the optical illumination system 206 is tilted with respect to the optical axis O2 of the optical relay system 208 by an angle 90° - α. The three aforementioned optical axes O1, O2, O3 intersect in an intermediate image space 212.

The optical illumination system 206 comprises an illumination light source 214 and an illumination objective 216. The illumination light source 214 generates the light sheet 204, for example using a cylindrical lens not explicitly shown in Figure 1. Alternatively, the illumination light source 214 may generate the light sheet 204 as a quasi-static light sheet 204 by means of a dedicated scanning element. The light sheet 204 extends in a light propagation direction A and an expansion direction B perpendicular thereto. The two directions A, B are indicated by an oblique coordinate system shown in Figure 1. The illumination objective 216 images the light sheet 204 into the intermediate image space 212.

The optical relay system 208 comprises an objective facing a sample 218, a first tube lens 220, a first ocular 222, a second ocular 224, a second tube lens 226 and a projection objective 228, which are arranged in this order along the optical axis O2 of the optical relay system 208. The optical relay system 208 images the light sheet 204 from the intermediate image space 212 into the sample 202. Since the optical axis O1 of the optical illumination system 206 is tilted by 90° - α with respect to the optical axis O2 of the optical relay system 208, the light propagation direction A is also tilted by 90° - α with respect to the optical axis O2 of the optical relay system 208. Layers within the sample 202 which are illuminated by the light sheet 204 are imaged back into the intermediate image space 212 by the optical relay system 208 as an intermediate image.

A scanning device 230 is arranged between the first ocular 222 and the second ocular 224. The scanning device 230 is exemplary formed by a movable mirror that deflects the optical axis O2 of the optical relay system 208. The scanning device 230 is used to move the light sheet 204 through the sample 202 along the scanning direction C that is perpendicular to the optical axis O2 of the optical relay system 208 in the sample 202. This allows the successive layers of the sample 202 along the scanning direction C to be illuminated so as to scan the volume of the sample 202.

The optical detection system 210 comprises a detection objective 232, a tube lens 234 and an image sensor 236, arranged in this order starting from the intermediate image space 212. The intermediate images of the illuminated layers in the intermediate image space 212 are imaged onto the image sensor 236 by the detection objective 232 and the tube lens 234. In this way, layer images are generated on the image sensor 236, each layer image corresponding to one of the layers in the sample 202 that are illuminated with the light sheet 204. The layer images are captured by the image sensor 236 in form of raw image data and collected into an image stack.

The sample positioning device 100 allows the user to rotate the sample 202 arranged thereon around the optical axis O3 of the optical detection system 210. Thereby, the sample's 202 orientation can be aligned with the scanning direction C. The extent of the focused part of the light sheet 204 along the light propagation direction A and the expansion direction B, i.e. the part of the light sheet 204 that is thin enough to be used for illumination, is much smaller than the extent to which the light sheet 204 can be moved along the scanning direction C through the sample 202 using the scanning device 230. Thus, one advantageous arrangement is to rotate the sample 202 such that the scanning direction C is aligned with the direction along which the region of interest has the largest extension. This arrangement will be described in more detail below with reference to Figures 3a and 3b.

Figure 3a is a schematic overview image 300 in which the sample 202 is not aligned with the scanning direction C.

The sample 202 exemplary comprises of a number of randomly oriented C. elegans specimens 302a, 302b which are nematodes having an elongated rod-like body. Two of the specimens 302a, 302b are to be imaged. Figure 3a also shows dashed rectangles 304a, 304b. Each of the rectangles 304a, 304b corresponds to a volume that can be imaged by the light sheet microscope 200 in a single recording, i.e. a single sweep of the light sheet 204 along the scanning direction C. In this example, the scanning direction C is right to left in Figure 3a. Thus, in order to image the two specimen 302a, 302b, six recordings are necessary. This increases phototoxic stress on the specimens 302a, 302b by exposing each specimen 302a, 302b three times to the illumination light. Further, since the specimen 302a, 302b are still alive, they may move between recordings. This results in artifacts at the seams in the composite volumetric image generated from the three separately captured volumes. The artifacts may in turn cause a loss of relevant information.

Figure 3b is a schematic overview image 300 in which individual regions in the sample 202 have been aligned with the scanning direction C.

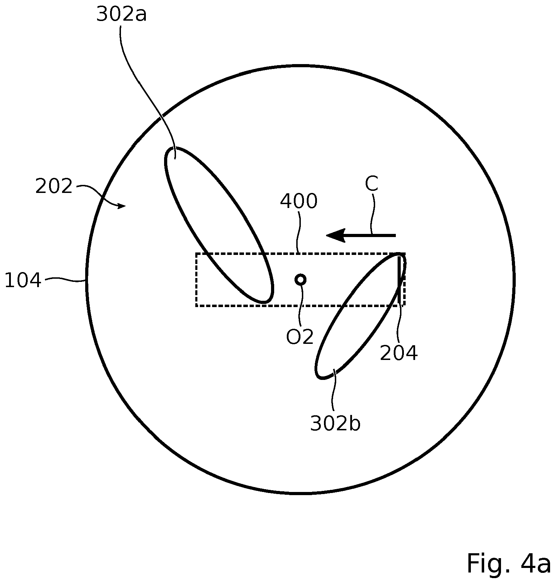

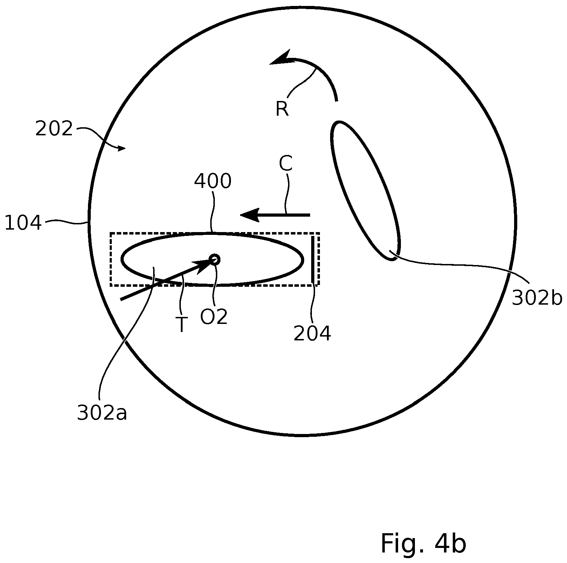

Contrary to the situation depicted in Figure 3a, in Figure 3b there are only two recordings needed to image both specimens 302a, 302b. The volumes images in the situation depicted in Figure 3b are shown as dotted rectangles 306a, 306b. To image the first specimen 302a, the sample 202 is rotated about 45° counterclockwise and moved laterally to the optical axis O2 such that the rectangle 306a can be swept by the light sheet 204. To image the second specimen 302b, the sample 202 is then rotated about 80° clockwise and moved laterally to the optical axis O2 such that the rectangle 306b can be swept by the light sheet 204. This ensures, that the scanning direction C is aligned along the rod-shaped body of the specimens 302a, 302b in each recording, minimizing the number of recordings needed to image the whole specimen 302a, 302b. The rotation and movement of the sample 202 is described in more detail below with reference to Figures 4a and 4b.

In order to determine the afore-mentioned rotation, the user may first select one or more regions of interest, in this case the two specimens 302a, 302b of C. elegans that are to be imaged. The control unit 116 then determines the rotations from the user-selected regions of interest. Alternatively, the regions of interest may be determined automatically by the image processing unit 120 based on image data corresponding to the overview image 300 shown in Figures 3a and 3b. When a rotation would cause the region of interest to move out of the field of view of the light sheet microscope 200, the control unit 116 may control the stage 112 to position the region of interest back into the field of view.

Figure 4a is a schematic view of the sample carrier 104 before rotation and translation.

Figure 4a shows the sample carrier 104 exemplary comprising the two specimens 302a, 302b of C. elegans as sample 202. Further, Figure 4a shows the region of the sample over which the light sheet 204 can be swept in order to generate a volumetric image of the sample 202 as a dotted rectangle 400, and the scanning direction C as an arrow. The area denoted by the rectangle 400 is fixed relative to the rest of the light sheet microscope 200. Thus, in order to image the whole specimen 302a, the sample 202 needs to be repositioned, i.e. rotated around the optical axis O2 using the rotatable sample holder 102 and moved laterally to the optical axis O2 by the stage 112.

Figure 4b is a schematic view of the sample carrier 104 after rotation and translation.

As can be seen in Figure 4b, the sample 202 has been rotated by about 45° relative to its original position depicted in Figure 4a. The rotation is facilitated by the rotatable sample holder 102 and shown in Figure 4b by an arrow R. Additionally, the sample 202 has been moved to the right and slightly up relative to its original position depicted in Figure 4a using the stage 112. This translation of the sample 202 is shown in Figure 4b by an arrow T. Using the rotatable sample holder 102 and the stage 112, the sample 202 has been repositioned such that the elongated body of the specimen 302a is fully within the area denoted by the rectangle 400, i.e. the volume imaged by the light sheet microscope 200.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Sample positioning device
- 102: Rotatable sample holder
- 104: Sample carrier
- 106: Sample position
- 108: Drive unit
- 110: Stage insert
- 112: Stage
- 114: Ledge
- 116: Control unit
- 118: Input device
- 120: Image processing unit
- 200: Light sheet microscope
- 202: Sample
- 204: Light sheet
- 206: Optical illumination system
- 208: Optical relay system
- 210: Optical detection system
- 212: Intermediate image space
- 214: Illumination light source
- 216: Illumination objective
- 218: Objective
- 220: Tube lens
- 222,224: Ocular
- 226: Tube lens
- 228: Projection objective
- 230: Scanning device
- 232: Detection objective
- 234: Tube lens
- 236: Image sensor
- 300: Overview image
- 302a, 302b: Specimen
- 304a, 304b, 306a, 306b, 400: Rectangle
- A: Propagation direction
- B: Expansion direction
- C: Scanning direction
- R, T: arrow

## Claims

1. A sample positioning device (100) for a light sheet microscope (200), comprising
a stage insert (110) configured to be received by a stage (112) of the light sheet microscope (200), the stage insert (110) comprising a rotatable sample holder (102),
wherein the rotatable sample holder (102) comprises a sample position (106) configured to receive a sample carrier (104), and
wherein the rotatable sample holder (102) is configured to be rotatable around an axis of rotation that is parallel to an optical axis (O2) of the light sheet microscope (200) thereby enabling a rotation of a sample (202) received by the sample carrier (104) in a field of view of the light sheet microscope (200) when the stage insert (110) is received by the stage (112) of the light sheet microscope (200).

2. The sample positioning device (100) according to claim 1, wherein the stage insert (110) is configured to be received in a recess of the stage (112), the recess being arranged along the optical axis of the light sheet microscope (200).

3. A sample positioning device (100) for a light sheet microscope (200), comprising
a stage (112) of the light sheet microscope (200) comprising a rotatable sample holder (102), the stage (112) being configured to move the rotatable sample holder (102) along at least one direction perpendicular to an optical axis (O2) of the light sheet microscope (200),
wherein the rotatable sample holder (102) is arranged along the optical axis (O2) of the light sheet microscope (200),
wherein the rotatable sample (202) comprises a sample position (106) configured to receive a sample carrier (104), and
wherein the rotatable sample holder (102) is configured to be rotatable around an axis of rotation that is parallel to the optical axis (O2) of the light sheet microscope (200) to rotate a sample (202) received by the sample carrier (104) in a field of view of the light sheet microscope (200).

4. The sample positioning device (100) according to any one of the preceding claims, comprising a drive unit (108) configured to rotate the rotatable sample holder (102), and a control unit (116) configured to control the drive unit (108).

5. The sample positioning device (100) according to claim 4, wherein the control unit (116) is configured to receive a user input and to control the drive unit (108) to rotate the rotatable sample holder (102) according to the received user input.

6. The sample positioning device (100) according to claim 5, wherein the user input corresponds to a rotation specified by a user, and the control unit (116) is configured to control the drive unit (108) to rotate the rotatable sample holder (102) according to the user-specified rotation.

7. The sample positioning device (100) according to claim 5 or 6, wherein the user input corresponds to a region of interest in the sample (202), the region of interest being specified by the user, and
wherein the control unit (116) is configured to determine a rotation of the rotatable sample holder (102) based on the user-specified region of interest and to control the drive unit (108) to rotate the rotatable sample holder (102) according to the determined rotation.

8. The sample positioning device (100) according to any one of the claims 4 to 7, comprising an image processing unit (120) configured to receive image data from the light sheet microscope (200) and to determine a region of interest in the sample (202) based on image data corresponding to an image of said sample (202) captured by the light sheet microscope (200).

9. The sample positioning device (100) according to claim 7 or 8, wherein the control unit (116) is configured to control the drive unit (108) to rotate the rotatable sample holder (102) such that a scanning direction along which a light sheet (204) generated by the light sheet microscope (200) is scanned through the sample (202) is aligned with the direction along which the region of interest has the largest extension.

10. The sample positioning device (100) according to any one of the claims 4 to 7, comprising an image processing unit (120) configured to receive image data from the light sheet microscope (200), to determine a rotation of the rotatable sample holder (102) based on image data corresponding to an image of said sample (202) captured by the light sheet microscope (200) and to control the drive unit (108) to rotate the rotatable sample holder (102) according to the determined rotation.

11. The sample positioning device (100) according to any one of the claims 4 to 10, wherein the control unit (116) is configured to cause a translation of the stage (112) in x- and/or y-direction.

12. The sample positioning device (100) according to any one of the preceding claims comprising a control element configured to enable a user to manually rotate the rotatable sample holder (102).

13. A light sheet microscope (200), comprising a sample positioning device (100) according to any one of the preceding claims.

14. The light sheet microscope (200) according to claim 13, wherein the light sheet microscope (200) comprises a single objective (218) directed at the sample (202).
